(19) **Europäisches Patentamt European Patent Office Office européen des brevets**

(11) **EP 4 472 052 A1**

(12) **EUROPEAN PATENT APPLICATION**

(43) Date of publication:
04.12.2024 Bulletin 2024/49

(21) Application number: 23176010.9

(22) Date of filing: 30.05.2023

(51) International Patent Classification (IPC):
H02M 3/156 (2006.01)      H02M 1/44 (2007.01)
G05F 1/56 (2006.01)       H04B 1/69 (2011.01)

(52) Cooperative Patent Classification (CPC):
H02M 3/156; H02M 1/44

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Infineon Technologies Austria AG 9500 Villach (AT)**

(72) Inventors:
• JANG, Sang Ho
  Gyeonggi-do (KR)
• KIM, Joo Hoon
  Gyeonggi-do (KR)
• LEE, Dong Wook
  Seoul (KR)

(74) Representative: **Westphal, Mussgnug & Partner, Patentanwälte mbB Werinherstraße 79 81541 München (DE)**

(54) **METHOD FOR OPERATING A POWER CONVERTER, CONTROL CIRCUIT, AND POWER CONVERTER**

(57) A method and a control circuit for operating an electronic switch (21) in a switching circuit (2) of a power converter are disclosed. The method includes operating the electronic switch (21) in a PWM mode, and modulating the switching frequency in the PWM mode dependent on a voltage level of an input voltage (Vin) received by the switching circuit (2).

FIG 1

EP 4 472 052 A1

**Description**

This disclosure relates in general to a method for operating a power converter, in particular a switched-mode power converter.

A switched-mode power converter includes at least one electronic switch that is operated in a PWM (pulse-width modulated) fashion in order to regulate at least one output signal such as an output voltage or an output current of the power converter. In certain types of power converters, such as flyback converters operating in the critical conduction mode or the quasi-resonant mode, a switching frequency of the at least one electronic switch may vary dependent on a power consumption of a load.

If, however, the power consumption of the load is relatively constant for a certain time, the switching frequency may be relatively constant, too. This may cause EMI (electromagnetic interference) issues.

It is therefore desirable to avoid EMI issues in the operation of a switched-mode power converter.

One example relates to a method. The method includes operating an electronic switch in a switching circuit of a power converter in a PWM mode, and modulating the switching frequency in the PWM mode dependent on a voltage level of an input voltage received by the switching circuit.

Another example relates to a control circuit. The control circuit is configured to operate an electronic switch in a switching circuit of a power converter in a PWM mode, and modulate the switching frequency in the PWM mode dependent on a voltage level of an input voltage received by the switching circuit.

Examples are explained below with reference to the drawings. The drawings serve to illustrate certain principles, so that only aspects necessary for understanding these principles are illustrated. The drawings are not to scale. In the drawings the same reference characters denote like features.

Figure 1 schematically illustrates one example of a power converter that includes a switching circuit, a rectifier circuit connected to the switching circuit, and a control circuit for controlling the switching circuit;

Figure 2 shows a timing diagram that illustrates operating an electronic switch in the switching circuit in a PWM fashion;

Figure 3 illustrates one example of a method for operating the electronic switch in the switching circuit;

Figure 4 illustrates one example of the switching circuit in greater detail, wherein the switching circuit has a flyback-converter topology;

Figure 5 illustrates one example of the rectifier circuit;

Figure 6 illustrates one example of a filter connected in parallel with a primary winding of a transformer in the switching circuit according to Figure 4;

Figure 7 shows signal diagrams that illustrate one example for operating the switching circuit according to Figure 2;

Figure 8 shows a signal diagram that illustrates one example for modulating a feedback signal in the power converter according to Figure 2 using a triangular modulation signal;

Figure 9 shows a signal diagram that illustrates one example of the triangular modulation signal;

Figure 10 illustrates one example for adjusting an amplitude of the modulation signal dependent on the input voltage in order to vary the switching frequency of the electronic switch in the power converter dependent on the input voltage;

Figure 11 illustrates one example of the control circuit;

Figure 12 illustrates one example of a feedback signal generator included in the control circuit according to Figure 11;

Figure 13 illustrates one example for measuring an input current of the power converter;

Figure 14 illustrates one example for measuring the input voltage of the power converter;

Figure 15 illustrates one example for generating an auxiliary voltage that is dependent on a voltage across the electronic switch in the power converter;

Figure 16 shows signal diagrams of a voltage across the electronic switch, the auxiliary voltage, and a control signal of the electronic switch when the power converter is operated in a first operating mode (critical conduction mode, CrCM);

Figure 17 illustrates one example of an off-time adjustment circuit included in the control circuit according to Figure 11 and configured to operate the power converter in the first operating mode;

Figure 18 shows signal diagrams of the voltage across the electronic switch, the auxiliary voltage and the control signal of the electronic switch when the power converter is operated in a second operating mode (quasi-resonant mode, QRM);

Figure 19 illustrates one example of an off-time adjustment circuit included in the control circuit according to Figure 11 and configured to operate the power converter in the second operating mode;

Figure 20 shows signal diagrams that illustrate operation of a zero-crossing selection circuit in the off-time adjustment circuit according to Figure 19; and

Figure 21 illustrates one example of a feedback signal generator according to another example.

In the following detailed description, reference is made to the accompanying drawings. The drawings form a part of the description and for the purpose of illustration show examples of how the invention may be used and implemented. It is to be understood that the features of the various embodiments described herein may be combined with each other, unless specifically noted otherwise.

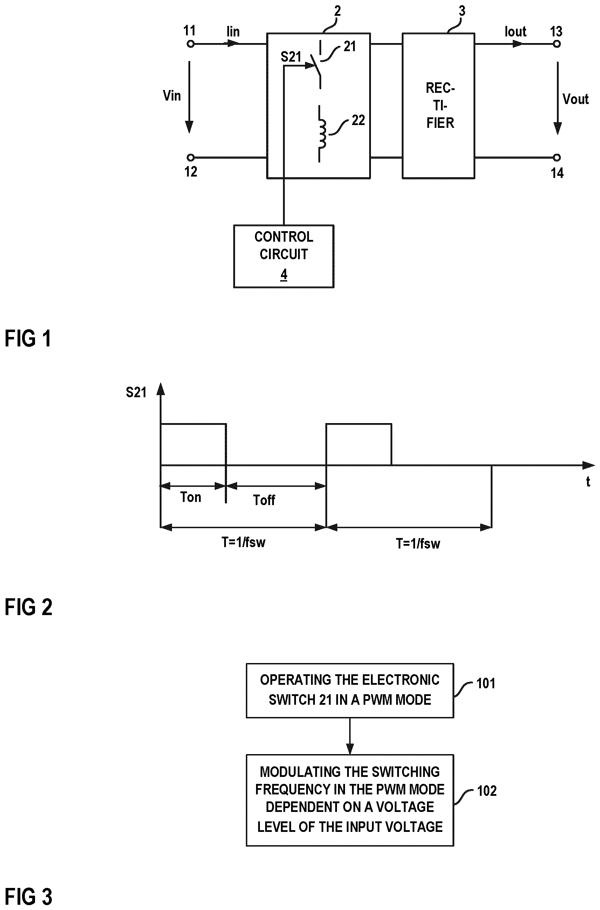

Figure 1 illustrates one example of a power converter. The power converter includes an input 11, 12 configured to receive an input voltage Vin and an input current Iin and an output 13, 14 configured to provide an output voltage Vout and an output current Iout. Referring to Figure 1, the input 11, 12 may include a first input node 11 and the second input node 12, wherein the input voltage Vin is a voltage received between the first and second input nodes 11, 12. Equivalently, the output 13, 14 may include a first output nodes 13 and a second output node 14, wherein the output voltage Vout is a voltage provided between the first and second output nodes 13, 14.

Referring to Figure 1, the power converter further includes a switching circuit 2 that is configured to receive the input voltage Vin and the input current Iin, and a rectifier circuit 3. The rectifier circuit 3 is connected to the switching circuit 2 and is configured to provide the output current Iout and the output voltage Vout. The switching circuit 2 includes at least one electronic switch 21 that switches on or off dependent on a control signal S21, and an inductor 22. Furthermore, the power converter includes a control circuit 4 that is configured to generate the control signal S21 received by the at least one electronic switch 21 in the switching circuit 2.

The power converter is configured to regulate an output signal provided by the power converter. The regulated output signal is, for example, the output voltage Vout, the output current Iout, or an output power Pout, which is given by the output current Iout multiplied with the output voltage Vout. The control circuit 4 is configured to control operation of the at least one electronic switch 21 such that the output signal is regulated. More detailed examples of the control circuit 4 are explained herein further below.

According to one example, the control circuit 4 is configured to operate the at least one electronic switch 21 in a PWM (pulse-width modulated) fashion. This is explained with reference to Figure 2 in the following.

Figure 2 shows a signal diagram of the control signal S21 according to one example. The control signal S21 may have an on-level, which is a signal level that switches on the electronic switch 21, or an off-level, which is a signal level that switches off the electronic switch 21. Just for the purpose of illustration, the on-level is a high signal level and the off-level is a low signal level in the example illustrated in Figure 2.

Referring to Figure 2, the control circuit 4 is configured to operate the electronic switch 21 in the PWM mode in a plurality of successive drive cycles. In each drive cycle, the control signal S21 has an on-level for an on-time Ton and an off-level for an off-time Toff. A cycle duration T of one drive cycle is given by the duration of the on-time Ton plus the duration of the off-time Toff,

$$T = Ton + Toff \qquad (1).$$

A switching frequency fsw of the switched-mode operation of the electronic switch 21 is given by the reciprocal of the cycle duration T

$$fsw = 1/T \qquad (2).$$

A duty cycle d of PWM operating the electronic switch 21 is given by the duration of the on-time Ton divided by the cycle duration T,

$$d = \frac{Ton}{T} \tag{3}.$$

Figure 3 illustrates one example of a method for operating the electronic switch 21. Referring to Figure 3, the method includes operating the electronic switch 21 in in a PWM mode (see 101 in Figure 3). Furthermore, the method includes modulating the switching frequency fsw in the PWM mode dependent on a voltage level of the input voltage Vin (see 102 in Figure 3). More detailed examples of this method are explained herein further below.

The method according to Figure 3 is explained in the following with reference to a power converter implemented as a flyback converter. This, however, is only an example. The method according to Figure 3 is not restricted to be used in a power converter implemented as a flyback converter.

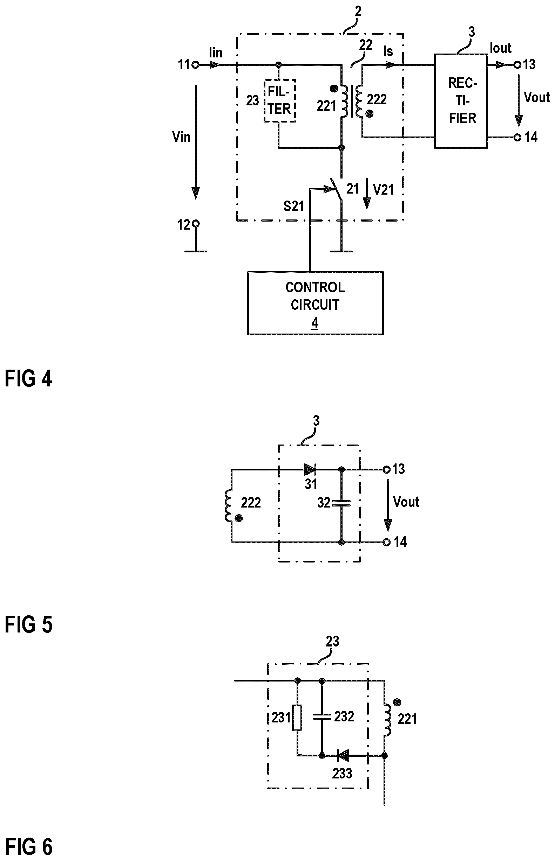

Figure 4 illustrates one example of a power converter implemented as a flyback converter. In the power converter according to Figure 4, the inductor 22 in the switching circuit 2 is a transformer with a primary winding 221 and a secondary winding 222, wherein the primary winding 221 and the secondary winding 222 are inductively coupled. The switching circuit 2 includes one electronic switch 21. The electronic switch 21 is connected in series with the primary winding 221 of the transformer 22, wherein a series circuit including the primary winding 221 and the electronic switch 21 is connected between the first and second input nodes 11, 12. The rectifier 3 is connected to the secondary winding 222. Optionally, a filter 23 is connected in parallel with the primary winding 221. One example of the optional filter 23 is illustrated in Figure 6 and explained herein further below.

Modulating the switching frequency fsw of the electronic switch 21 dependent on the voltage level of the input voltage Vin, as illustrated in Figure 3, may help to achieve a high magnetization of the transformer 22 at low input voltages and may help to avoid saturation of the transformer 22 at high input voltages. According to one example, the input voltage Vin is a rectified grid voltage, wherein the amplitude of the grid voltage, dependent on the country, may vary between $90V_{RMS}$ and $230V_{RMS}$. Consequently, the input voltage Vin may vary within a rather large voltage range.

Figure 5 illustrates one example of the rectifier 3. In this example, the rectifier 3 includes a rectifier element 31, such as a diode, and a capacitor 32. The rectifier element 31 and the capacitor 32 are connected in series, wherein a series circuit including the rectifier element 31 and the capacitor 32 is connected in parallel with the secondary winding 222 of the transformer 22. The output voltage Vout is available across the capacitor 32. That is, circuit nodes of the capacitor 32 form the first and second output nodes 13, 14 of the rectifier 3.

It should be noted that implementing the rectifier 3 in the simple way illustrated in Figure 5 with only one rectifier element 31 and one capacitor 32 is only an example. More complex rectifiers such as rectifiers that additionally include an inductor may be used as well. Rectifiers suitable to be connected to the secondary winding of a transformer in a flyback converter are commonly known, so that no further explanation is required in this regard.

Figure 6 shows one example of the optional filter 23 that may be connected in parallel with the primary winding 221 of the transformer 22. The type of filter 23 illustrated in Figure 6 may also be referred to as snubber circuit and is configured to clamp voltage spikes that may occur in the voltage across the transformer 22, in particular during or shortly after switching events of the electronic switch 21. In the example illustrated in Figure 6, the filter 23 includes a parallel circuit with a resistor 231 and a capacitor 232, and a rectifier element 233, such as a diode. The rectifier element 233 is connected in series with the parallel circuit, wherein a series circuit including the rectifier element 233 and the parallel circuit with the resistor 231 and the capacitor 232 is connected in parallel with the primary winding 221.

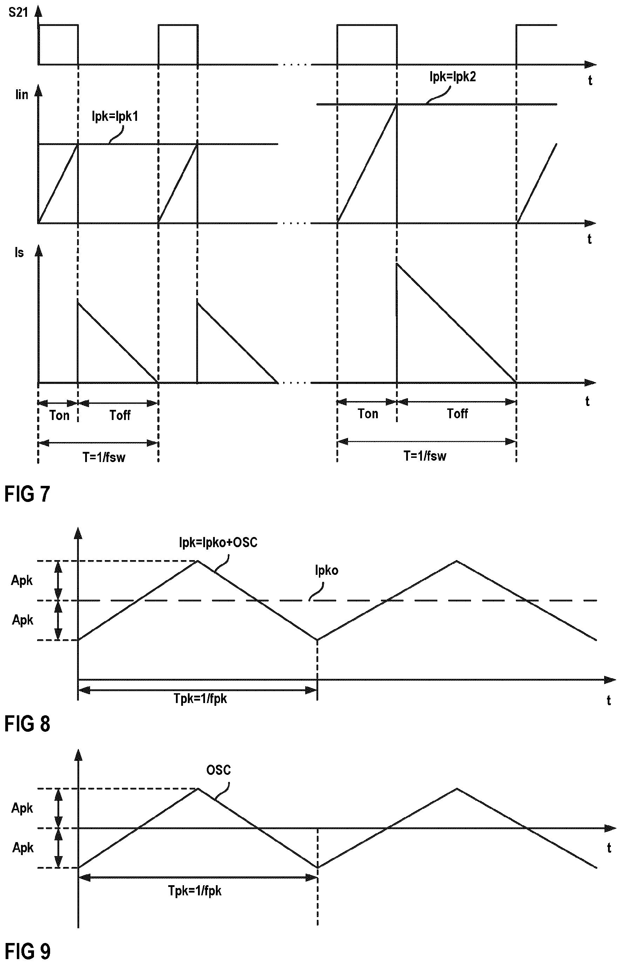

Figure 7 shows signal diagrams that illustrate one example of operating the power converter according to Figure 4. More specifically, Figure 7 shows signal diagrams of the control signal S21, the input current Iin, and a secondary side current Is. The secondary side current Is is the current through the secondary winding 222 of the transformer 22. Referring to Figure 7, the input current Iin, which equals the current through the primary winding 221, increases during the on-time Ton of the electronic switch 21, wherein energy is stored in the transformer 22 during the on-time Ton. During the on-time Ton the secondary side current Is is zero. When the electronic switch 21 switches off the energy previously stored in the transformer 22 causes a current to flow through the secondary winding 222, wherein the secondary side current Is decreases during the off-time Toff of the electronic switch 21.

In the example illustrated in Figure 7, the power converter operates in the critical conduction mode. This includes that the control switch 21 switches on at the time instance at which the secondary side current Is has decreased to zero, or shortly after this time instance. Switching on the electronic switch 21 shortly after the time instance at which the secondary side current Is has decreased to zero may include switching on the electronic switch 21 one quarter of one period of parasitic oscillations that may occur in the switching circuit 2 after the secondary side current Is has decreased to zero. This is explained in detail herein further below.

According to one example, the duration of the on-time Tone is adjusted by comparing the input current Iin (which equals the current through the primary winding 221) with a feedback signal Ipk that is dependent on the output signal that is to be regulated. According to one example, the on-time Ton ends when the input current Iin reaches the feedback signal Ipk. In this example, the feedback signal essentially represents the maximum of the input current Iin that is reached within the on-time Ton. Thus, the feedback signal Ipk may also be referred to as peak current signal.

Figure 7 illustrates two operating scenarios, a first operating scenario in which the feedback signal Ipk equals a first value Ipk1, Ipk=Ipk1, and a second scenario in which the feedback signal Ipk equals a second value Ipk2 higher than the first value Ipk1, Ipk=Ipk2. As can be seen from Figures 7, during the on-time Ton the input current Iin linearly increases. The slope of the linear increase is essentially proportional to the voltage level of the input voltage Vin. Thus, at a given input voltage Vin, the duration of the on-time Ton increases as the feedback signal Ipk increases. Thus, in the example illustrated in Figure 7, the on-time duration Ton is shorter when the feedback signal Ipk equals the first value Ipk1 as compared to the scenario when the feedback signal Ipk equals the second value Ipk2.

Moreover, in the critical conduction mode, an increase of the on-time duration Ton results in an increase of the off-time duration Toff, so that a higher feedback signal Ipk results in a longer drive cycle duration T and, therefore, results in a lower switching frequency fsw, which is the reciprocal of the drive cycle duration T.

Referring to Figures 3, operating the power converter includes modulating the switching frequency fsw in the PWM mode dependent on the voltage level of the input voltage Vin. Referring to Figure 7, the feedback signal Ipk, at a given input voltage Vin, affects the switching frequency fsw such that the switching frequency fsw decreases as the feedback signal Ipk increases, and the switching frequency fsw increases as the feedback signal Ipk decreases. Thus, according to one example, modulating the switching frequency fsw includes modulating the feedback signal Ipk. This is explained with reference to Figure 8 in the following.

Figure 8 shows a signal diagram that illustrate one example of modulating the feedback signal Ipk in order to modulate the switching frequency fsw. In the example illustrated in Figure 8, the feedback signal Ipk is modulated using an of oscillating signal OSC, which may also be referred to as jitter signal, such that the feedback signal is given by

$$Ipk = Ipko + OSC \qquad (4),$$

where Ipko denotes a base feedback signal, and OSC denotes the oscillating signal. The oscillating signal is timely varying. The base feedback signal Ipko is adjusted in order to regulate the output signal, wherein the base feedback signal may vary over the time dependent on a power consumption of a load (not illustrated in the drawings) connected to the output 13, 14 or dependent on the input voltage in order to regulate the output signal. This is explained in detail herein further below.

The oscillating signal OSC defines the variation of the feedback signal Ipk over the time. At a given base feedback signal Ipko, the feedback signal Ipk oscillates around the base feedback signal Ipko in accordance with the oscillating signal OSC. According to one example, the oscillating signal OSC is an alternating signal with an average of zero, so that the average of the feedback signal Ipk over the time equals the base feedback signal Ipko. In this way, timely varying the feedback signal Ipk dependent on the oscillating signal OSC does not negatively affect the regulation of the output signal. However, at a given input voltage Vin and a given power consumption of a load, varying the feedback signal Ipk results in a variation of the switching frequency and, therefore, improves EMI compatibility of the power converter.

Figure 9 shows a signal diagram that illustrates the oscillating signal OSC included in the varying feedback signal illustrated in Figure 9. In this example, the oscillating signal OSC is a triangular signal with an amplitude Apk and a frequency fpk. The frequency fpk is the reciprocal of one period Tpk of the oscillating signal, fpk=1/Tpk.

Basically, the higher the amplitude Apk of the oscillating signal, the stronger the peak current Ipk varies and the stronger the switching frequency, at a given input voltage Vin and a given output power, varies. Furthermore, the higher the frequency fpk of the oscillating signal OSC, the faster the switching frequency fsw varies. According to one example, the frequency fpk of the oscillating signal OSC is fixed independent of the amplitude Apk. The frequency fpk of the oscillating signal OSC is much lower than the switching frequency fsw of the electronic switch 21. According to one example, the frequency of the oscillating signal is less than 10%, less than 1%, or even less than 0.1% of a maximum switching frequency fsw_max of the electronic switch 21. One example for limiting the switching frequency fsw to a predefined maximum frequency is explained herein further below.

In the example illustrated in Figure 9, the oscillating signal is a triangular signal. This, however, is only an example. Any other type of alternating signal having an average of zero such as, for example, a sinusoidal signal, a sine squared signal, or even a rectangular signal may be used as well.

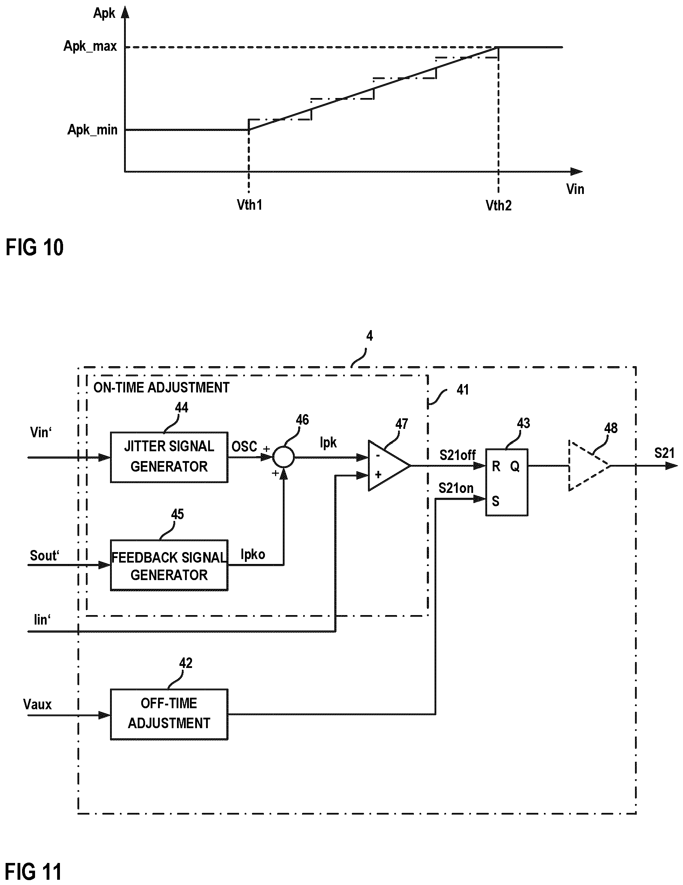

Referring to the above, the switching frequency fsw is modulated dependent on the input voltage Vin. One example for modulating the switching frequency dependent on the input voltage Vin is illustrated in Figure 10. In this example, modulating the switching frequency includes modulating the amplitude Apk of the oscillating signal OSC. According to one example, the amplitude Apk, at least within a given range of the input voltage Vin, increases as the input voltage Vin increases. Thus, the higher the voltage level of the input voltage Vin, the higher the amplitude Apk and the stronger the switching frequency variation.

Referring to Figure 10, increasing the amplitude Apk dependent on the input voltage Vin may include increasing the amplitude Apk from a minimum value Apk_min to a maximum value Apk_max as the input voltage Vin increases from a first threshold voltage level Vth1 to a second threshold voltage level Vth2. In the example illustrated in Figure 10, the amplitude Apk increases linearly as the voltage level of the input voltage Vin increases. This, however, is only an example. It is also possible to increase the amplitude in steps as the input voltage Vin increases, as illustrated in dashed and dotted lines in Figure 10. According to one example, the amplitude Apk equals the minimum value Apk_min when the voltage level of the input voltage Vin is below the first threshold Vth1, and the amplitude Apk equals the maximum value Apk_max when the voltage level of the input voltage Vin is higher than the second threshold Vth2.

According to one example, the base feedback signal Ipko, dependent on a power consumption of the load, varies between a minimum value Ipko_min and a maximum value Ipko_max. The maximum value may be associated with a maximum output power that can be provided by the power converter to the load. According to one example, the maximum amplitude Apk_min is zero, so that there is no feedback signal variation when the input voltage Vin is below the first threshold Vth1. According to one example, the maximum amplitude Apk_max is between 5% and 50%, in particular between 5% and 20%, of the maximum value of the base feedback signal Ipko. The maximum value of the base feedback signal Ipko may occur when the power consumption of the load reaches a maximum.

Referring to the above, the input voltage Vin is a rectified grid voltage, wherein the grid voltage may vary in a range of between $90V_{RMS}$ and $230V_{RMS}$. According to one example, the first threshold is selected from between 90V and 110V and the second threshold is selected from between 200V and 230V.

Figure 11 illustrates one example of a control circuit 4 that is configured to operate the power converter in the critical conduction mode in the way illustrated in Figure 7 and, at the same time, modulate the switching frequency fsw by modulating the feedback signal Ipk. The control circuit according to Figure 11 includes an on-time adjustment circuit 41 and an off-time adjustment circuit 42. The on-time adjustment circuit 41 defines the duration of the on-time Ton during one drive cycle, and the off-time adjustment circuit 42 defines the duration of the off-time Toff during one drive cycle. The on-time adjustment circuit 41 generates an off-signal S21off which defines when the electronic switch 21 is to be switched off. That is, the off-signal S21off defines when the signal level of the control signal S21 changes from the on-level (the high level in Figures 2 and 7) to the off-level (the low level in Figures 2 and 7). The off-time adjustment circuit 42 generates an on-signal which defines when the electronic switch 21 is to be switched on. That is, the on-signal S21on defines when the signal level of the control signal S21 changes from the off-level to the on-level.

In the control circuit 4 according to Figure 11, the signal level of the control signal S21 and, therefore, the switching state of the electronic switch 21, is defined by a latch 43 that receives the off-signal S21off from the on-time adjustment circuit 41 and the on-signal S21on from the off-time adjustment circuit 42. Just for the purpose of illustration, the latch 43 is an SR flip-flop that receives the off-signal S21off at a reset input R and the on-signal S21on at a set input S. This, however, is only an example. Other types of latches that are configured to adjust the signal level of the drive signal S21 dependent on the off-signal S21off and the on-signal S21on may be used as well.

The output signal of the latch 43 may form the control signal S21. According to another example, illustrated in dashed lines in Figure 11, the control signal S21 is generated by a drive circuit 48 dependent on the output signal of the latch. The drive circuit 48 is configured to generate a control signal suitable to drive the electronic switch 21 dependent on the output signal of the latch 43.

Referring to Figure 11, the on-time adjustment circuit 41 includes a comparator 47 that receives the feedback signal Ipk and a measured input current Iin'. The measured input current Iin' represents the input current Iin and may be generated based on the input current Iin using a conventional current sensor. According to one example, the measured input current Iin' is proportional to the input current Iin. The comparator 47 is configured to compare the measured input current Iin' and the feedback signal Ipk and is configured to generate the off-signal S21off such that the off-signal causes the control signal S 21 to change from the on-level to the off-level whenever the measured input current Iin' reaches the feedback signal Ipk.

Referring to Figure 11, a feedback signal generator 45 generates the base feedback signal Ipko based on a measured output signal Sout'. The measured output signal Sout' represents the output signal that is to be regulated and may be obtained by measuring the output signal using a conventional current, voltage, or power sensor. The measured output signal Sout' represents the output voltage Vout, for example, when the output voltage Vout is to be regulated, represents the output current Iout when the output current Iout is to be regulated, and represents the output power Pout when the output power is to be regulated.

The oscillating signal OSC is generated by a jitter signal generator 44 based on the measured input voltage Vin'. The measured input voltage represents the voltage level of the input voltage Vin and can be obtained by measuring the input voltage using a conventional voltage sensor. The jitter signal generator 45 is configured to generate the oscillating signal, which may also be referred to as jitter signal, such that the amplitude Apk of the oscillating signal OSC is dependent on the measured input voltage Vin'. According to one example, the jitter signal generator 44 is configured to generate the oscillating signal OSC such that the amplitude of the oscillating signal is dependent on the voltage level of the input voltage Vin in the way illustrated in Figure 8.

Referring to Figure 11, an adder 46 receives the base feedback signal Ipko and the oscillating signal OSC and provides the feedback signal Ipk to the comparator 47.

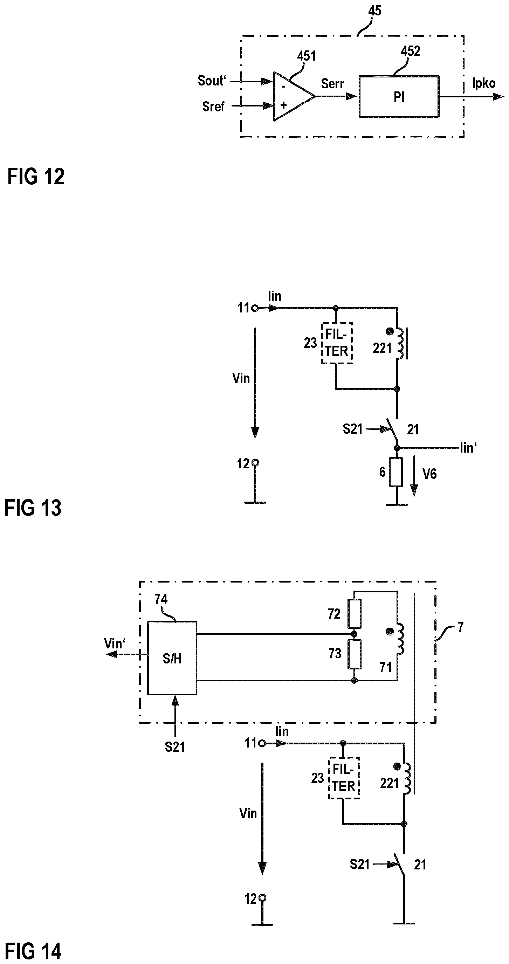

The feedback signal generator 45 can be implemented in a conventional way for generating a feedback signal in a flyback converter. According to one example, the feedback signal generator 45 is configured to generate an error signal based on the measured output signal Sout' and a reference Sref, wherein the error signal represents a difference between the output signal Sout to be regulated and a desired signal level of the output signal to be regulated. Based on the error signal the feedback signal generator 45 generates the base peak current. According to one example, the feedback signal generator 45 generates the base feedback signal Ipko such that the base peak current Ipko increases as a difference between the output signal Sout and the reference value represented by the error signal Serr increases. Figure 12 illustrates one example of a feedback signal generator 45 implemented in this way.

In this example, the feedback signal generator 45 includes a subtractor 451 that provides the error signal Serr based on subtracting the measured output signal Sout' from the reference signal Sref. A controller 452, such as, for example, a proportional-integral (PI) controller, generates the base feedback signal Ipko based on the error signal Serr.

Figure 13 illustrates one example for obtaining the measured input current Iin'. In this example, the input current Iin is measured using a shunt resistor 6 connected in series with the primary winding 221 and the electronic switch 21. A voltage V6 across the shunt resistor 6 represents the measured input current Iin'. In this example, a proportionality factor between the input current Iin and the measured input current Iin' is given by a resistance of the shunt resistor 6.

Figure 14 illustrates one example for measuring the input voltage Vin, that is, for providing the measured input voltage Vin'. In this example, an input voltage measurement circuit 7 providing the measured input voltage Vin' includes an auxiliary winding 71 of the transformer. The auxiliary winding 71 is inductively coupled with the primary winding 221 and the secondary winding 222 (not illustrated in Figure 14). Referring to Figure 14, the input voltage measurement circuit 7 includes a sample-and-hold circuit 74 that is configured to sample a voltage across the auxiliary winding 71 and provide the measured input voltage Vin'. According to one example, the auxiliary winding 71 has the same winding sense as the primary winding 221, so that the voltage across the auxiliary winding 71 is essentially proportional to the voltage across the primary winding 221. During the on-state of the electronic switch 21 the voltage across the primary winding 221 essentially equals the input voltage Vin, so that during the on-state of the electronic switch 21 the voltage across the auxiliary winding 71 is essentially proportional to the input voltage Vin.

The sample-and-hold circuit 74 is configured to sample the voltage across the auxiliary winding 71 during the on-state of the electronic switch 21. For this reason, the sample-and-hold circuit 74 receives the control signal S21 (as illustrated in Figure 14) or receives an information about the time period when the electronic switch 21 is in the on-state.

The sample-and-hold circuit 74 may directly sample the voltage across the auxiliary winding 71. According to another example, illustrated in Figure 14, the measurement circuit 7 includes a resistive voltage divider connected in parallel with the auxiliary winding 71, and the sample-and-hold circuit 74 samples a voltage provided by the resistive voltage divider. The resistive voltage divider may include two resistors 72, 73 connected in series. The sample-and-hold circuit 74 may sample the voltage across one of these resistors 72, 73.

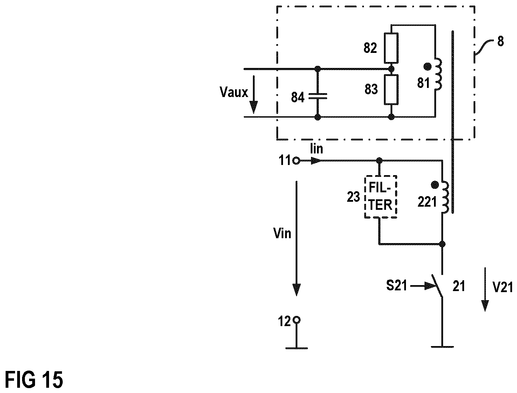

As explained above, in the critical conduction mode the electronic switch 21 is switched on when the current through the secondary winding 222 reaches zero, or shortly thereafter. Time instances when the secondary side current Is reaches zero may be detected using an auxiliary voltage Vaux that is dependent on the voltage across the primary winding 221. One example of an auxiliary circuit 8 that is configured to provide such auxiliary voltage Vaux is illustrated in Figure 15.

The auxiliary circuit according to Figure 15 includes an auxiliary winding 81 inductively coupled with the primary winding 221 and the secondary winding 222 (not illustrated in Figure 15). The auxiliary voltage Vaux is proportional to the voltage across the auxiliary winding 81 and may be obtained using a resistive voltage divider 82, 83 based on a voltage across the auxiliary winding 81. Optionally, a filter capacitor 84 is connected between the second nodes where the auxiliary voltage Vaux is obtained. The capacitor 84 serves to filter parasitic high-frequency components from the voltage across the auxiliary winding 81.

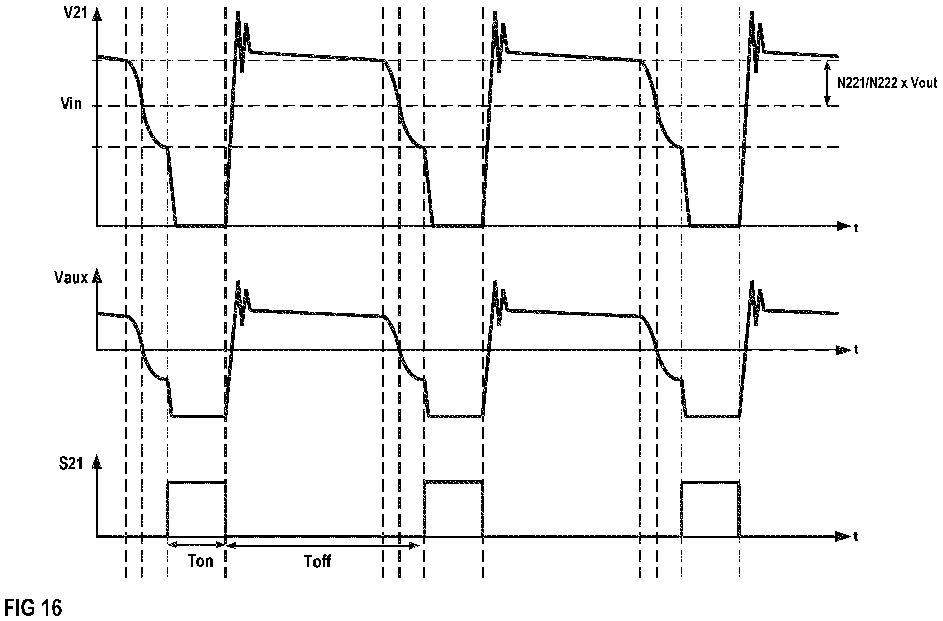

Figure 16 shows signal diagrams that illustrate the functionality of the auxiliary circuit 8 according to Figure 15. Figure 16 shows signal diagrams of a switch voltage V21 across the electronic switch 21, the auxiliary voltage Vaux, and the control signal S21 over several drive cycles of the PWM operation of the power converter. Referring to Figure 16, during the on-times Ton the switch voltage V21 is essentially zero. At the beginning of the off-times Toff the switch voltage V21 rapidly increases to a voltage level that is essentially given by the input voltage Vin plus a reflected voltage across the primary winding 221. This reflected voltage is proportional to the output voltage Vout, wherein a proportionality factor N221/N222 is given by a ratio between the number of windings N221 of the primary winding 221 and the number of windings N222 of the secondary winding 222. Oscillations of the switch voltage V21 at the beginning of the off-times Toff are due to parasitic effects, such as a parasitic resonant circuit formed by the transformer 22 and parasitic capacitances of the electronic switch 21.

The auxiliary voltage Vaux is essentially proportional to a voltage that is given by the switch voltage V21 minus the input voltage Vin. The secondary side current Is reaches zero when the voltage across the primary winding reaches zero, that is, when the switch voltage V21 equals the input voltage Vin. Thus, during the off times Toff time instances when the voltage across the primary winding 221 reaches zero correspond to those time instances when the auxiliary voltage Vaux reaches zero.

Thus, the electronic switch 21 may be switched on when during the off-time Toff the auxiliary voltage Vaux reaches zero, or shortly thereafter. In view of reducing switching losses it may be beneficial to slightly delay switching on the electronic switch 21 until the auxiliary voltage Vaux reaches a minimum, that is, to switch on the electronic switch 21 shortly after the auxiliary voltage Vaux reaches zero.

When the electronic switch 21 is not switched on immediately when the auxiliary voltage Vaux reaches zero parasitic oscillations of the switch voltage V21 and, consequently, of the auxiliary voltage Vaux may occur. A period of those parasitic oscillations is given by the parasitic elements that form the parasitic resonant circuit explained before. The period of such parasitic oscillations can be calculated based on measurements of the parasitic elements or based on simulations.

Those parasitic oscillations may have the effect that they reduce the switch voltage V21 across the electronic switch 21 to a voltage level that is below the input voltage Vin. Switching on the electronic switch 21 when the switch voltage V21 is lower than the input voltage Vin may help to reduce switching losses. The switch voltage V21 essentially reaches a minimum after one quarter of one period of the parasitic oscillation after the zero-crossing of the auxiliary voltage Vaux.

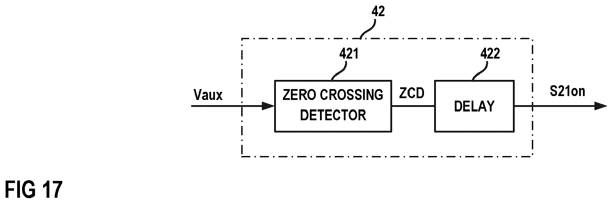

Figure 17 illustrates one example of the off-time adjustment circuit 42. In this example, the off time adjustment circuit 42 includes a zero-crossing detector 421 that receives the auxiliary voltage Vaux and is configured to detect zero-crossings of the auxiliary voltage and provide a zero-crossing detection signal ZCD that represents time instances at which the auxiliary voltage Vaux reaches zero. A delay element 422 receives the zero-crossing detection signal ZCD and provides the on-signal S21on. According to one example, the on-signal S21on is generated by the delay element 422 such that the on-signal S21on causes the control signal S21 to switch on the electronic switch 21 one quarter of one period of the parasitic oscillations after the zero-crossing detected by the zero-crossing detector 421.

Adjusting the switching frequency dependent on the input voltage Vin is not restricted to the operating mode in which the power converter operates in the critical conduction mode. According to another example, the switching frequency fsw is adjusted based on the input voltage Vin when the power converter operates in a quasi-resonant mode (QRM). In the quasi-resonant mode, the electronic switch 21 does not switch on when the transformer 22 has been demagnetized. The transformer 22 has been demagnetized when the secondary side current Is reaches zero for the first time during the off time, that is, when the switch voltage V21 reaches the input voltage Vin for the first time or the auxiliary voltage Vaux reaches zero for the first time. Instead, in the quasi-resonant mode, after the transformer 22 has been demagnetized, there is an oscillation phase in which oscillations of the switch voltage V21 and, equivalently, the auxiliary voltage Vaux may occur before the electronic switch 21 again switches on.

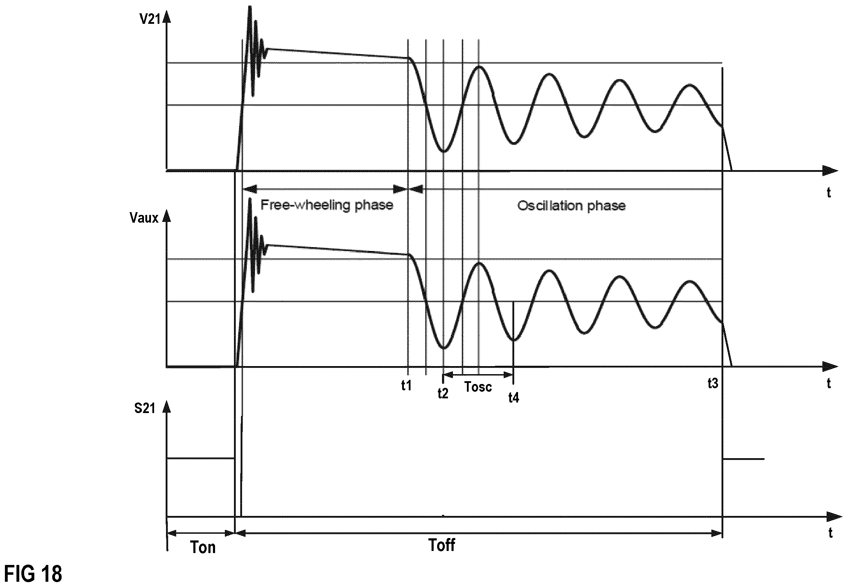

Figure 18 shows signal diagrams that illustrate operating the power converter in the quasi-resonant mode. More specifically, Figure 18 shows signal diagrams of the switch voltage V21, the auxiliary voltage Vaux, and the control signal S21 during one period of operating the power converter in the quasi-resonant mode. In Figure 18, t1 denotes a first time instance at which the transformer 22 has been demagnetized, that is, at which the secondary side current Is reaches zero. t2 denotes a time instance that is one quarter of one period Tosc of the parasitic oscillations after the first time instance. The second time instance t2 is the time instance at which the electronic switch 21 switches on when the power converter operates in the critical conduction mode. In the quasi-resonant mode, however, one or more periods of the parasitic oscillations after the second time instance t2 are allowed to occur before the electronic switch 21 again switches on. In the example illustrated in Figure 18, the electronic switch 21 again switches on at a third time instance t3, which is four periods of the parasitic oscillation after the second time instance t2. The power converter may operate in the quasi-resonant mode under low load conditions, which are operating conditions in which a power consumption of the load is low.

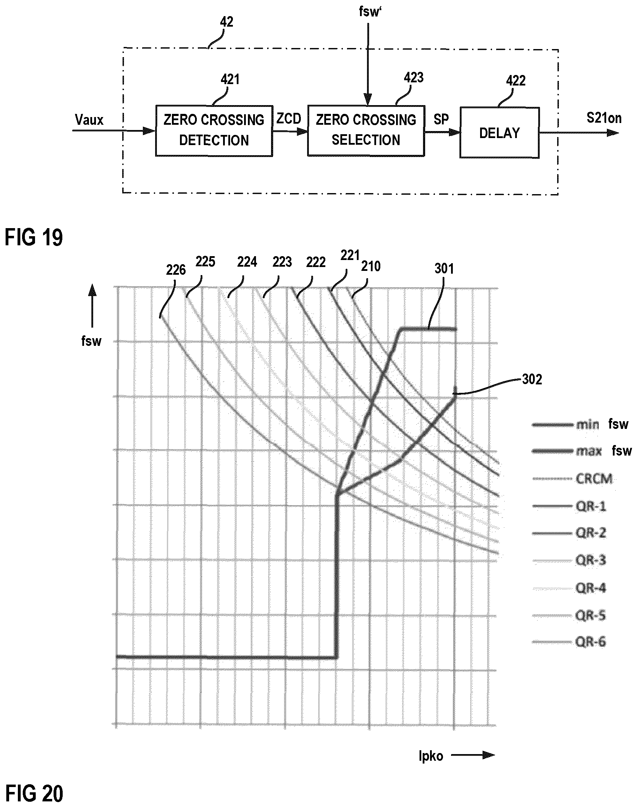

Figure 19 illustrates one example of an off-time control circuit 42 that is configured to operate the power converter either in in the critical conduction mode or the quasi-resonant mode. The off-time control circuit 42 according to Figure 19 is based on the off-time control circuit according to Figure 17 and, in addition to the zero-crossing detector 421 and the delay element 422, includes a zero-crossing selector 423. The zero-crossing selector 423 receives the zero-crossing detection signal ZCD and decides after which of the zero-crossings represented by the zero-crossing detection signal ZCD the electronic switch 21 is to be switched on for the next time. The zero-crossing selection circuit 423 may output a switching pulse SP at the time instance of the selected zero-crossing.

The delay element 422 delays the switching pulse for one quarter of one period Tosc of the parasitic isolation, so that the electronic switch 21 switches on after one period of the parasitic oscillation after the selected zero crossing. According to one example, selected zero-crossings are zero-crossing at which the auxiliary voltage Vaux crosses zero in a direction such that after one quarter of the parasitic oscillation period Tosc the switch voltage V21 reaches a minimum.

According to one example, the zero-crossing selector 423 is configured to select the zero-crossing such that the switching frequency fsw is within a predefined frequency range. For this, the zero-crossing selector 423 may receive a measured switching frequency fsw', which is obtained by measuring the switching frequency fsw and represents the switching frequency fsw.

Figure 20 shows signal diagrams that illustrate one example of a method that may be implemented in the zero-crossing selector 423 in order to maintain the switching frequency within a given frequency range. Figure 20 illustrates the switching frequency fsw of the power converter dependent on the base peak current Ipko when the power converter operates in the critical conduction mode or in the quasi-resonant mode. Curve 210 in Figure 20 illustrates the switching frequency fsw dependent on the base peak current Ipko in the critical conduction mode (CRCM). Curves 221 to 226 illustrate the switching frequency fsw dependent on the base peak current Ipko in the quasi-resonant mode at different selected zero-crossings. Curve 221 illustrates the switching frequency fsw in the quasi-resonant mode when the power converter switches on after one period of the oscillation after the first minimum of the auxiliary voltage Vaux, which is at time instance t4 in Figure 18. Curve 222 illustrates the switching frequency fsw in the quasi-resonant mode when the power converter switches on after two periods of the oscillation after the first minimum of the auxiliary voltage Vaux, and so on.

As can be seen from Figure 20, in the critical conduction mode as well as in the quasi-resonant mode the switching frequency fsw increases as the base peak current Ipko decreases. The decreasing base peak current Ipko is equivalent to a decreasing power consumption of the load. Based on the measured switching frequency fsw' the zero-crossing selector 423, by selecting the zero-crossing after which the electronic switch 21 is to be switched on, causes the power converter either to operate in the critical conduction mode, in which the electronic switch 21 switches on after the first zero-crossing, or to operate in the quasi-resonant mode, in which the electronic switch 21 switches on one or more parasitic oscillation periods after the first zero-crossing. As can be seen from Figure 20, at a given base peak current Ipko, the switching frequency fsw decreases when operation of the power converter changes from the critical conduction mode to the quasi-resonant mode. Thus, when the switching frequency reaches a maximum switching frequency, represented by curve 301 in Figure 20, for example, the zero-crossing selector 423 may switch from operating the power converter in the critical conduction mode to the quasi-resonant mode in which the electronic switch 21 switches on after the second zero-crossing. The switching frequency in this operating mode is represented by curve 221 in Figure 20. Equivalently, when the switching frequency fsw reaches the maximum switching frequency in one of the quasi-resonant modes in which the electronic switch 21 switches on after a predefined zero-crossing, the zero-crossing selector 423 may change the operating mode of the power converter to a quasi-resonant mode in which the electronic switch 21 switches on after a zero-crossing that is one more (higher) than the predefined zero-crossing.

Equivalently, when the switching frequency reaches a minimum switching frequency as represented by curve 302 in Figure 20, and the power converter operates in the quasi-resonant mode such that the electronic switch 21 switches on at a predefined zero-crossing, the zero-crossing selector 423 may change operation of the power converter either to a quasi-resonant mode in which the electronic switch 21 switches on at a zero-crossing that is one less (lower) than the predefined zero-crossing, or to the critical conduction mode.

The feedback signal generator 45 can be implemented in a conventional way for generating a feedback signal in a flyback converter. According to one example, the feedback signal generator 45 is configured to generate an error signal based on the measured output signal Sout' and a reference Sref, wherein the error signal represents a difference between the output signal Sout to be regulated and a desired signal level of the output signal to be regulated. Based on the error signal the feedback signal generator 45 generates the base peak current. According to one example, the feedback signal generator 45 generates the base peak current such that the base peak current Ipko increases as a difference between the output signal and the reference value represented by the error signal increases.

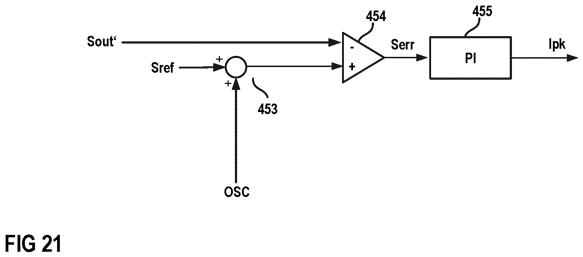

Figure 21 shows a modification of one portion of the on time adjustment circuit 41 that generates the peak current Ipk based on the measured input voltage Vin', the measured output signal Sout', and the reference signal. In the example illustrated in Figure 21, the oscillating signal is added to the reference signal Sref by an adder 453. A subtractor 454 subtracts the measured output signal Sout' from an output signal of the adder in order to provide an error signal Serr. A controller such as, for example, a PI controller generates the peak current Ipk based on the error signal Serr.

Some of the aspects explained herein before are briefly summarized in the following with reference to numbered examples.

Example 1. A method, including: operating an electronic switch in a switching circuit of a power converter in a PWM mode; and modulating the switching frequency in the PWM mode dependent on a voltage level of an input voltage received by the switching circuit.

Example 2. The method of example 1, wherein operating the electronic switch in the PWM mode includes operating the electronic switch in a plurality of drive cycles each including an on-time and an off-time, wherein the method further includes generating a modulated feedback signal that is modulated dependent on the voltage level of the input voltage, and wherein adjusting an on-time duration of the on-time includes comparing an input current received by the switching circuit with the modulated feedback signal.

Example 3. The method of example 2, wherein generating the modulated feedback signal includes: generating a base feedback signal dependent on a voltage level of an output voltage of the power converter and dependent on a reference voltage; and modulating the base feedback signal using a modulation signal having an amplitude that is dependent on the voltage level of the input voltage.

Example 4. The method of example 3, wherein a modulating the base feedback signal using the modulation signal includes adding the modulation signal to the base feedback signal.

Example 5. The method of example 2, wherein generating the modulated feedback signal includes: generating the feedback signal dependent on a voltage level of an output voltage of the power converter and dependent on a reference voltage, wherein a reference voltage is modulated using a modulation signal having an amplitude that is dependent on the voltage level of the input voltage.

Example 6. The method of any one of examples 2 to 5, wherein the amplitude of the modulation signal being dependent on the voltage level of the input voltage includes that the amplitude of the modulation signal increases as the voltage level of the input voltage increases within a predefined voltage range of the input voltage.

Example 7. The method of example 6, wherein the amplitude linearly increases as the voltage level of the input voltage increases within the predefined voltage range.

Example 8. The method of any one of examples 2 to 5, wherein the modulation signal is a triangular modulation signal.

Example 9. The method of any one of examples 2 to 8, wherein adjusting an off-time duration in each of the plurality of drive cycles includes adjusting the off-time duration dependent on a voltage across the electronic switch.

Example 10. The method of example 9, wherein adjusting the off-time duration includes: detecting valleys in the voltage across the electronic switch, and terminating the off-time and switching on the electronic switch upon detecting a valley in the voltage across the electronic switch.

Example 11. The method of example 10, wherein terminating the off-time includes terminating the off-time upon detecting the first valley in the voltage across the electronic switch after beginning of the off-time.

Example 12. The method of example 10, wherein terminating the off-time includes: monitoring the switching frequency of the electronic switch, and selecting the valley of the voltage across the electronic switch for terminating the off-time such that the switching frequency is within predefined frequency limits.

Example 13. The method of any one of examples 1 to 12, wherein the switching circuit has a flyback-converter topology.

Example 14. A control circuit configured to operate an electronic switch in a switching circuit of a power converter in a PWM mode; and modulate the switching frequency in the PWM mode dependent on a voltage level of an input voltage received by the switching circuit.

Example 15. An executable program code including instructions which, when executed by a control circuit including a microcontroller, to cause the control circuit to carry out the method of any one of examples 1 to 13.

## Claims

1. A method, comprising:

   operating an electronic switch (21) in a switching circuit (2) of a power converter in a PWM mode; and
   modulating the switching frequency in the PWM mode dependent on a voltage level of an input voltage (Vin) received by the switching circuit (2).

2. The method of claim 1,

   wherein operating the electronic switch (21) in the PWM mode comprises operating the electronic switch (21) in a plurality of drive cycles each including an on-time and an off-time,
   wherein the method further comprises generating a modulated feedback signal (Ipk) that is modulated dependent on the voltage level of the input voltage (Vin), and
   wherein adjusting an on-time duration (Ton) of the on-time comprises comparing an input current (Iin) received by the switching circuit (2) with the modulated feedback signal (Ipk).

3. The method of claim 2, wherein generating the modulated feedback signal (Ipk) comprises:

   generating a base feedback signal (Ipko) dependent on a voltage level of an output voltage (Vout) of the power converter and dependent on a reference voltage (Vref); and
   modulating the base feedback signal (Ipko) using a modulation signal (OSC) having an amplitude (Apk) that is dependent on the voltage level of the input voltage (Vin).

4. The method of claim 3, wherein a modulating the base feedback signal (Ipko) using the modulation signal (OSC) comprises adding the modulation signal (OSC) to the base feedback signal (Ipko).

5. The method of claim 2, wherein generating the modulated feedback signal (Ipk) comprises:

generating the feedback signal (Ipk) dependent on a voltage level of an output voltage (Vout) of the power converter and dependent on a reference voltage (Vref),

wherein a reference voltage (Vref) is modulated using a modulation signal (OSC) having an amplitude (Apk) that is dependent on the voltage level of the input voltage.

6. The method of any one of claims 2 to 5, wherein the amplitude (Apk) of the modulation signal being dependent on the voltage level of the input voltage (Vin) comprises that the amplitude (Apk) of the modulation signal increases as the voltage level of the input voltage increases within a predefined voltage range of the input voltage.

7. The method of claim 6, wherein the amplitude linearly increases as the voltage level of the input voltage (Vin) increases within the predefined voltage range.

8. The method of any one of claims 2 to 5,
   wherein the modulation signal (OSC) is a triangular modulation signal.

9. The method of any one of claims 2 to 8,
   wherein adjusting an off-time duration (Toff) in each of the plurality of drive cycles comprises adjusting the off-time duration (Toff) dependent on a voltage (V21) across the electronic switch.

10. The method of claim 9, wherein adjusting the off-time duration (Toff) comprises:

    detecting valleys in the voltage (V21) across the electronic switch (21), and
    terminating the off-time and switching on the electronic switch upon detecting a valley in the voltage (V21) across the electronic switch (21).

11. The method of claim 10, wherein terminating the off-time comprises terminating the off-time upon detecting the first valley in the voltage across the electronic switch (21) after beginning of the off-time.

12. The method of claim 10, wherein terminating the off-time comprises:

    monitoring the switching frequency of the electronic switch (21), and
    selecting the valley of the voltage across the electronic switch (21) for terminating the off-time such that the switching frequency is within predefined frequency limits.

13. The method of any one of the preceding claims, wherein the switching circuit (2) has a flyback-converter topology.

14. A control circuit configured to

    operate an electronic switch (21) in a switching circuit (2) of a power converter in a PWM mode; and
    modulate the switching frequency in the PWM mode dependent on a voltage level of an input voltage (Vin) received by the switching circuit (2).

15. An executable program code comprising instructions which, when executed by a control circuit comprising a microcontroller, to cause the control circuit to carry out the method of any one of claims 1 to 13.

**FIG 1**

**FIG 2**

OPERATING THE ELECTRONIC SWITCH 21 IN A PWM MODE — 101

MODULATING THE SWITCHING FREQUENCY IN THE PWM MODE DEPENDENT ON A VOLTAGE LEVEL OF THE INPUT VOLTAGE — 102

**FIG 3**

FIG 4

FIG 5

FIG 6

**FIG 7**

**FIG 8**

**FIG 9**

Apk

Apk_max -----------------------------------------

Apk_min

Vth1                                      Vth2            Vin

**FIG 10**

4

ON-TIME ADJUSTMENT

44                          46        47        41          43              48

Vin'    →    JITTER SIGNAL      OSC  +              S21off   R   Q              S21
             GENERATOR              46   Ipk    -
                                         +       +         S21on  S

45

Sout'   →   FEEDBACK SIGNAL    Ipko
            GENERATOR

Iin'

42

Vaux    →    OFF-TIME
             ADJUSTMENT

**FIG 11**

45

451                452

Sout' ─→ | - \
         |   > Serr ─→ | PI | ─→ Ipko
Sref ─→ | + /          452

**FIG 12**

11○ ─→ Iin

Vin

23 [FIL-TER]    221

S21 ─→ 21

6    V6

Iin'

12○

**FIG 13**

74

Vin' ←─ S/H    72    73    71

7

S21

11○ ─→ Iin

Vin

23 [FIL-TER]    221

S21 ─→ 21

12○

**FIG 14**

FIG 15

FIG 16

FIG 17

FIG 18

**FIG 19**

**FIG 20**

Sout'

Sref

454

455

Serr

PI

Ipk

+
+

453

OSC

**FIG 21**

Europäisches
Patentamt
European
Patent Office
Office européen
des brevets

# EUROPEAN SEARCH REPORT

Application Number

EP 23 17 6010

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/321958 A1 (BRINLEE ANTONY [US] ET AL) 23 December 2010 (2010-12-23) | 1-9, 13-15 | INV. H02M3/156 |
| Y | * paragraphs [0020], [0025], [0026] - [0028], [0033], [0034], [0038]; figures 1-3 * | 10-12 | H02M1/44 G05F1/56 H04B1/69 |
| X | US 2008/049457 A1 (CHOI HANG-SEOK [KR] ET AL) 28 February 2008 (2008-02-28) | 1,13-15 | |
| Y | * paragraphs [0028], [0032]; figure 1 * | 10-12 | |
| A | | 2-9 | |
| X | JP 2005 295637 A (DENSEI LAMBDA KK) 20 October 2005 (2005-10-20) | 1,13-15 | |
| A | * abstract; figures 1,2 * | 2-12 | |
| X | US 6 115 274 A (MAO HENGCHUN [US]) 5 September 2000 (2000-09-05) | 1,13-15 | |
| A | * column 2, lines 10-15; figure 1 * | 2-12 | |
| Y | US 2015/236598 A1 (KRUEGER MARTIN [DE] ET AL) 20 August 2015 (2015-08-20) * paragraph [0023]; figure 4 * | 10-12 | |
| Y | EP 2 509 205 A1 (ST MICROELECTRONICS SRL [IT]) 10 October 2012 (2012-10-10) * paragraph [0018] * | 10-12 | |
| A | US 2016/134186 A1 (SAINT-PIERRE ROLAND SYLVERE [US] ET AL) 12 May 2016 (2016-05-12) * paragraphs [0028], [0033], [0034]; figures 1-4 * | 1-15 | |
| A | US 2022/255438 A1 (CHEN ZHAN [CN] ET AL) 11 August 2022 (2022-08-11) * paragraphs [0028] - [0032], [0050], [0053]; figures 3-6 * | 1-15 | |

**TECHNICAL FIELDS SEARCHED (IPC)**

H02M
H04B
G05F

The present search report has been drawn up for all claims

| Place of search | Date of completion of the search | Examiner |
|---|---|---|
| The Hague | 23 October 2023 | Kanelis, Konstantin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 17 6010

This annex lists the patent family members relating to the patent documents cited in the above-mentioned European search report.
The members are as contained in the European Patent Office EDP file on
The European Patent Office is in no way liable for these particulars which are merely given for the purpose of information.

23-10-2023

| Patent document cited in search report | Publication date | Patent family member(s) | Publication date |
|---|---|---|---|
| US 2010321958 A1 | 23-12-2010 | NONE | |
| US 2008049457 A1 | 28-02-2008 | KR 20080008037 A | 23-01-2008 |
| | | US 2008049457 A1 | 28-02-2008 |
| JP 2005295637 A | 20-10-2005 | JP 4356110 B2 | 04-11-2009 |
| | | JP 2005295637 A | 20-10-2005 |
| US 6115274 A | 05-09-2000 | NONE | |
| US 2015236598 A1 | 20-08-2015 | CN 104852579 A | 19-08-2015 |
| | | US 2015236598 A1 | 20-08-2015 |
| EP 2509205 A1 | 10-10-2012 | CN 102739053 A | 17-10-2012 |
| | | CN 202652070 U | 02-01-2013 |
| | | EP 2509205 A1 | 10-10-2012 |
| | | US 2012250367 A1 | 04-10-2012 |
| US 2016134186 A1 | 12-05-2016 | CN 107112891 A | 29-08-2017 |
| | | EP 3219002 A1 | 20-09-2017 |
| | | JP 2017534235 A | 16-11-2017 |
| | | US 2016134186 A1 | 12-05-2016 |
| | | US 2017373589 A1 | 28-12-2017 |
| | | US 2019149040 A1 | 16-05-2019 |
| | | US 2019393775 A1 | 26-12-2019 |
| | | WO 2016077209 A1 | 19-05-2016 |
| US 2022255438 A1 | 11-08-2022 | CN 112953198 A | 11-06-2021 |
| | | US 2022255438 A1 | 11-08-2022 |

EPO FORM P0459

For more details about this annex : see Official Journal of the European Patent Office, No. 12/82